(19) **Europäisches Patentamt**
**European Patent Office**
**Office européen des brevets**

(11) **EP 3 319 240 A1**

(12) **EUROPEAN PATENT APPLICATION**
published in accordance with Art. 153(4) EPC

(43) Date of publication:
**09.05.2018 Bulletin 2018/19**

(51) Int Cl.:
**H04B 7/04** (2017.01)

(21) Application number: **15896724.0**

(22) Date of filing: **30.06.2015**

(86) International application number:
**PCT/CN2015/082793**

(87) International publication number:
**WO 2017/000193 (05.01.2017 Gazette 2017/01)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **Fujitsu Limited**
**Kawasaki-shi, Kanagawa 211-8588 (JP)**

(72) Inventors:
• **XI, Wei**
  **Beijing 100025 (CN)**
• **ZHOU, Hua**
  **Beijing 100025 (CN)**
• **WU, Jianming**
  **Beijing 100025 (CN)**

(74) Representative: **Haseltine Lake LLP**
**Lincoln House, 5th Floor**
**300 High Holborn**
**London WC1V 7JH (GB)**

(54) **CHANNEL STATE INFORMATION FEEDBACK, USER PAIRING AND DATA TRANSMISSION METHOD, DEVICE AND SYSTEM**

(57) Embodiments of this disclosure provide a method and apparatus for feeding back channel state information, a user pairing method and apparatus, a data transmitting method and apparatus and a system. In one embodiment, the apparatus for feeding back channel state information includes: a feedback unit configured to feed back channel state information to an eNB, the channel state information including a precoding matrix index (PMI); a first channel quality indicator ($CQI_1$) corresponding to the PMI; and azimuth angle reference information. With a new CSI feedback mechanism of the embodiments of this disclosure, an eNB may avoid selecting UEs with a relatively large azimuth angle for pairing, and may only select or preferentially select UEs with a relatively small azimuth angle for pairing, thereby preventing loss of gains of beamforming of paired UEs, and improving performance of MUST transmission.

FIG. 1

**Description**

<u>Field</u>

This disclosure relates to the field of communication technologies, and in particular to a method and apparatus for feeding back channel state information, a user pairing method and apparatus, a data transmitting method and apparatus and a system.

<u>Background</u>

In recent years, as development of the society and progress of technologies, wireless communication technologies greatly change our lives. In order to support exponentially increasing traffics and continuously emerging new traffics of a future wireless communication system, it should have lower latency and a larger network capacity. And this brings about new challenges to the 4th generation wireless communication systems represented by long-term evolution (LTE)/LTE-advanced. Therefore, global large research institutes and standardization organizations have started studies on the 5th generation wireless communication systems one after another.

Till now, multiple access techniques adopted by all wireless communication systems are orthogonal multiple accesses. As it can be seen from the information theory that nonorthogonal multiple accesses have larger channel capacities than orthogonal multiple accesses. Hence, the nonorthogonal multiple access technique becomes a hot spot in the study on the 5th generation wireless communication systems. In various nonorthogonal multiple access techniques, nothing is more representative than multiuser multiplexing in a power dimension, such as a downlink multiuser superposition transmission (MUST) technique of the 3rd generation partnership project (3GPP) in LTE-advance Rel. 13.

Without loss of generality, a basis principle of the MUST technique shall be described below by taking two user equipments (UEs) as examples.

First, each UE measures a configured reference signal (such as a common reference signal (CRS), and a channel state information reference signal (CSI-RS), etc.), and feeds back channel state information (CSI), such as precoding matrix indicators (PMIs) and channel quality indicators (CQIs), obtained through calculation, to an eNB. Then, the eNB estimates whether each pair of UE can be paired for MUST transmission according to the channel state information fed back by each UE. Two UEs capable of performing MUST transmission usually need to satisfy two conditions: one is that the two UEs feed back identical PMIs, and the other is that a difference between CQIs of the two UEs is sufficiently large (greater than a predefined threshold).

In transmitting data, the eNB performs superposed coding on data of the two UEs by fully using a pathloss difference between the two UEs, that is, allocating larger power for a farther UE, and allocating smaller power for a nearer UE. In receiving data, the farther UE is subjected to weaker interference (i.e. data signals of the nearer UE) after experiencing a larger pathloss, as transmission power of itself is relatively small, thus, it may directly detect data signals of itself. And the nearer UE can detect data signals of itself only after detecting the data signals of the farther UE with relatively high signal to noise ratios and then performing interference cancellation on them (subtracting the detected data signals of the farther UE from received signals).

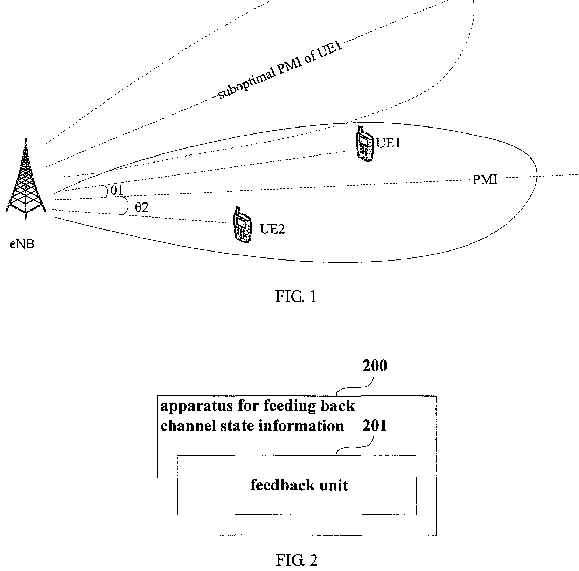

Due to limitation on a size of a codebook, there always exists an error between a PMI fed back by a UE and an actual direction angle, wherein, the actual direction angle corresponds to a channel direction indicator (CDI). Direction angles of two UEs with identical PMIs are often different, especially in MUST transmission, errors of the two UEs will be accumulated, thereby resulting in that an azimuth angle between two paired UEs performing MUST transmission is relatively large. FIG. 1 is a schematic diagram of performing MUST transmission by two paired UEs. As shown in FIG. 1, UE1 is a UE in the two paired UEs performing MUST transmission which is relatively far from the eNB, and a directed included angle from a direction to which its PMI corresponds to its direction angle is $\theta 1$; and UE2 is a UE in the two paired UEs performing MUST transmission which is relatively near to the eNB, and a directed included angle from a direction to which its PMI corresponds to its direction angle is $\theta 2$. An azimuth angle between the two paired UEs is $\theta 1-\theta 2$; where, $\theta 1$ is positive, and $\theta 2$ is negative; or, $\theta 1$ is negative, and $\theta 2$ is positive. It can be seen from FIG. 1 that accumulation of quantitative errors of PMIs of the two UEs will result in that there exists a relatively large azimuth angle between the two UEs, which will certainly lower gains of beamforming of at least one UE in the MUST transmission, thereby lowering performance of the MUST transmission.

It should be noted that the above description of the background is merely provided for clear and complete explanation of this disclosure and for easy understanding by those skilled in the art. And it should not be understood that the above technical solution is known to those skilled in the art as it is described in the background of this disclosure.

<u>Summary</u>

As described above, in a legacy channel state information feedback mechanism, an eNB is unable to accurately learn an azimuth angle between paired UEs. Hence, it is possible that two UEs having a relatively large azimuth angle are selected to be paired and perform MUST transmission.

In order to avoid that UEs having a relatively large azimuth angle are paired, embodiments of this disclosure provide an enhanced channel state information feedback mechanism, which may enable an eNB to learn an azimuth angle between paired UEs, thereby avoiding UEs having a relatively large azimuth angle are selected to be paired.

According to a first aspect of the embodiments of this disclosure, there is provided an apparatus for feeding back channel state information, applicable to UE, the apparatus including:

a feedback unit configured to feed back channel state information to an eNB; wherein, the channel state information includes:

> a precoding matrix index (PMI);
> a first channel quality indicator ($CQI_1$) corresponding to the PMI; and
> azimuth angle reference information.

According to a second aspect of the embodiments of this disclosure, there is provided a user pairing apparatus in multi-user superposition transmission (MUST), applicable to an eNB, the apparatus including:

> a receiving unit configured to receive channel state information fed back by each UE; wherein, the channel state information fed back by each UE includes: a precoding matrix index (PMI), a first channel quality indicator ($CQI_1$) corresponding to the PMI, and azimuth angle reference information, or includes: a precoding matrix index (PMI), a first channel quality indicator ($CQI_1$) corresponding to the PMI, indication information of a second channel quality indicator ($CQI_2$) corresponding to a channel direction indicator (CDI), and azimuth angle reference information;
> a grouping unit configured to group all UEs according to the precoding matrix indices (PMIs) in the channel state information fed back by the UEs, placing UEs with identical PMIs into the same group; and
> an evaluating unit configured to, according to a predefined evaluation condition, evaluate whether any two of UEs in the same group can be paired to perform MUST transmission, so as to determine a UE pair capable of being paired to perform MUST transmission.

According to a third aspect of the embodiments of this disclosure, there is provided a data transmitting apparatus, applicable to an eNB, the apparatus including:

> a pairing unit configured to pair all UEs according to channel state information fed back by the UEs, so as to determine a UE pair capable of performing MUST transmission and UE incapable of performing MUST transmission;
> a first scheduling unit configured to, for the UE pair capable of performing MUST transmission, schedule two UEs constituting the UE pair to perform MUST transmission according to the channel state information fed back by the two UEs; and
> a second scheduling unit configured to, for the UE incapable of performing MUST transmission, schedule the UE to perform transmission according to the channel state information fed back by the UE;
> wherein, the channel state information fed back by each UE includes: a precoding matrix index (PMI), a first channel quality indicator ($CQI_1$) corresponding to the PMI, and azimuth angle reference information, or includes: a precoding matrix index (PMI), a first channel quality indicator ($CQI_1$) corresponding to the PMI, indication information of a second channel quality indicator ($CQI_2$) corresponding to a channel direction indicator (CDI), and azimuth angle reference information.

According to a fourth aspect of the embodiments of this disclosure, there is provided a method for feeding back channel state information, applicable to UE, the method including:

feeding back channel state information by the UE to an eNB; wherein, the channel state information includes:

> a precoding matrix index (PMI);
> a first channel quality indicator ($CQI_1$) corresponding to the PMI; and
> azimuth angle reference information.

According to a fifth aspect of the embodiments of this disclosure, there is provided a user pairing method in multi-user superposition transmission (MUST), applicable to an eNB, the method including:

> receiving, by the eNB, channel state information fed back by each UE; wherein, the channel state information fed back by each UE includes: a precoding matrix index (PMI), a first channel quality indicator ($CQI_1$) corresponding to the PMI, and azimuth angle reference information, or includes: a precoding matrix index (PMI), a first channel quality

indicator (CQI$_1$) corresponding to the PMI, indication information of a second channel quality indicator (CQI$_2$) corresponding to a channel direction indicator (CDI), and azimuth angle reference information;

grouping all UEs by the eNB according to the precoding matrix indices (PMIs) in the channel state information fed back by the UEs, placing UEs with identical PMIs into the same group; and

according to a predefined evaluation condition, evaluating by the eNB whether any two of UEs in the same group can be paired to perform MUST transmission, so as to determine a UE pair capable of being paired to perform MUST transmission.

According to a sixth aspect of the embodiments of this disclosure, there is provided a data transmitting method, applicable to an eNB, the method including:

pairing all UEs by the eNB according to channel state information fed back by the UEs, so as to determine a UE pair capable of performing MUST transmission and UE incapable of performing MUST transmission;

for the UE pair capable of performing MUST transmission, scheduling two UEs constituting the UE pair to perform MUST transmission by the eNB according to the channel state information fed back by the two UEs; and

for the UE incapable of performing MUST transmission, scheduling the UE to perform transmission by the eNB according to the channel state information fed back by the UE;

wherein, the channel state information fed back by each UE includes: a precoding matrix index (PMI), a first channel quality indicator (CQI$_1$) corresponding to the PMI, and azimuth angle reference information, or includes: a precoding matrix index (PMI), a first channel quality indicator (CQI$_1$) corresponding to the PMI, indication information of a second channel quality indicator (CQI$_2$) corresponding to a channel direction indicator (CDI), and azimuth angle reference information.

According to a seventh aspect of the embodiments of this disclosure, there is provided UE, including the apparatus for feeding back channel state information as described in the first aspect.

According to an eighth aspect of the embodiments of this disclosure, there is provided an eNB, including the user pairing apparatus as described in the second aspect or the data transmitting apparatus as described in the third aspect.

According to a ninth aspect of the embodiments of this disclosure, there is provided a communication system, including the UE as described in the seventh aspect and the eNB as described in the eighth aspect.

An advantage of the embodiments of this disclosure exists in that with the new CSI feedback mechanism of the embodiments of this disclosure, the eNB may avoid selecting UEs with a relatively large azimuth angle for pairing, and may only select or preferentially select UEs with a relatively small azimuth angle for pairing, thereby preventing loss of gains of beamforming of paired UEs, and improving performance of MUST transmission.

With reference to the following description and drawings, the particular embodiments of this disclosure are disclosed in detail, and the principles of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

Brief Description of the Drawings

The drawings are included to provide further understanding of the present disclosure, which constitute a part of the specification and illustrate the exemplary embodiments of the present disclosure, and are used for setting forth the principles of the present disclosure together with the description. It is clear and understood that the accompanying drawings in the following description are some embodiments of this disclosure, and for those of ordinary skills in the art, other accompanying drawings may be obtained according to these accompanying drawings without making an inventive effort. In the drawings:

FIG. 1 is a schematic diagram of performing MUST transmission by two paired UEs;

FIG. 2 is a schematic diagram of a structure of an apparatus for feeding back channel state information of an embodiment of this disclosure;

FIG. 3 is a schematic diagram of a structure of a user pairing apparatus of an embodiment of this disclosure;

FIG. 4 is a schematic diagram of a structure of an evaluating unit in the user pairing apparatus of the embodiment of this disclosure;

FIG. 5 is a schematic diagram of a structure of a data transmitting apparatus of an embodiment of this disclosure;

FIG. 6 is a schematic diagram of a structure of a pairing unit in the data transmitting apparatus of the embodiment of this disclosure;

FIG. 7 is a schematic diagram of a structure of an evaluating module of the pairing unit in the data transmitting apparatus of the embodiment of this disclosure;

FIG. 8 is a flowchart of a method for feeding back channel state information of an embodiment of this disclosure;

FIG. 9 is a flowchart of a user pairing method of an embodiment of this disclosure;

FIG. 10 is a flowchart of pairing estimation in the user pairing method of the embodiment of this disclosure;

FIG. 11 is a flowchart of a data transmitting method of an embodiment of this disclosure;

FIG. 12 is an overall flowchart of one implementation of this embodiment;

FIG. 13 is a flowchart of pairing estimation in FIG. 12;

FIG. 14 is an overall flowchart of another implementation of this embodiment;

FIG. 15 is a flowchart of pairing estimation in FIG. 14;

FIG. 16 is a schematic diagram of a structure of a UE of an embodiment of this disclosure;

FIG. 17 is a schematic diagram of a structure of an eNB of an embodiment of this disclosure; and

FIG. 18 is a schematic diagram of a topology of a communication system of an embodiment of this disclosure.

Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

Various embodiments of this disclosure shall be described below with reference to the accompanying drawings. These embodiments are illustrative only, and are not intended to limit this disclosure.

Embodiment 1

The embodiment of the disclosure provides an apparatus for feeding back channel state information, applicable to a UE. FIG. 2 is a schematic diagram of a structure of the apparatus. As shown in FIG. 2, the apparatus 200 includes: a feedback unit 201 configured to feed back channel state information to an eNB; wherein, the channel state information includes: a precoding matrix index (PMI); a first channel quality indicator ($CQI_1$) corresponding to the PMI; and azimuth angle reference information.

In this embodiment, what is different from prior art is that in feeding back the CSI to the eNB, the UE further feeds back the azimuth angle reference information to the eNB in addition to feeding back the PMI and the CQI ($CQI_1$) corresponding to the PMI. Hence, the eNB may estimate whether the UEs can be paired for performing MUST transmission according to the azimuth angle reference information fed back by the UEs and CQIs (which are referred to as $CQI_2$s in this embodiment, and the $CQI_2$s may be fed back by the UEs via indication information of the second channel quality indicators ($CQI_2$s), or may be determined by the eNB according to the $CQI_1$s fed back by the UEs of the UEs corresponding to CDIs, thereby determining UEs capable of being paired for performing MUST transmission. Thus, the eNB may avoid selecting UEs with a relatively large azimuth angle for pairing, and may only select or preferentially select UEs with a relatively small azimuth angle for pairing, thereby preventing loss of gains of beamforming of paired UEs, and improving performance of MUST transmission.

In this embodiment, as described above, the UE may further feed back the indication information of the second channel quality indicator ($CQI_2$) in addition to feeding back the azimuth angle reference information, and the second channel quality indicator ($CQI_2$) corresponds to a channel direction indicator (CDI). Hence, the eNB may estimate whether the UEs can be paired for performing MUST transmission with reference to the second channel quality indicator ($CQI_2$) and the above azimuth angle reference information, thereby determining UEs capable of being paired for performing MUST transmission.

In this embodiment, if the UE does not feed back the indication information of the second channel quality indicator ($CQI_2$), the eNB may perform the above estimation by taking the $CQI_1$ fed back by the UE as $CQI_2$ of the UE, with details being going to be described in the following embodiment.

In this embodiment, the indication information of the second channel quality indicator ($CQI_2$) may be the second channel quality indicator itself, i.e. $CQI_2$, and may also be a difference between the second channel quality indicator ($CQI_2$) and the above first channel quality indicator ($CQI_1$), i.e. $CQI_2-CQI_1$, and in this way, it may also function to feed

back the $CQI_2$ corresponding to the CDI. By feeding back the $CQI_2$ corresponding to the CDI, the eNB may perform estimation about UE pairing, with details being going to be described in the following embodiment.

In one implementation of this embodiment, the azimuth angle reference information is a directed included angle (such as $\theta 1$, $\theta 2$ shown in FIG. 1) from a direction to which the PMI corresponds to a direction angle of the UE, or a one to one mapping function of the directed included angle, such as a sine function, or a tangent function, etc., and in this way, it may also function to feed back the above directed included angle. By feeding back the above directed included angle, the eNB may accordingly calculate the azimuth angle between the two UEs being performed pairing estimation, thereby performing estimation about UE pairing, with details being going to be described in the following embodiment.

In another implementation of this embodiment, the azimuth angle reference information is a suboptimal PMI of the UE. By feeding back the suboptimal PMI, the eNB may determine a direction of the directed included angle from the direction to which the PMI fed back by the UE corresponds to the direction angle of the UE, and then may determine a size of amplitude of the directed included angle according to a difference between two CQIs, fed back by the UE, corresponding respectively to the PMI and the CDI, so as to calculate the azimuth angle between the two UEs being performed pairing estimation and perform estimation about UE pairing, with details being going to be described in the following embodiment.

With the apparatus for feeding back channel state information in this embodiment, the UE may feed back the CSI, and the eNB may accordingly calculate the azimuth angle between the two UEs being performed pairing estimation, so as to avoid selecting UEs with a relatively large azimuth angle for pairing, and only select or preferentially select UEs with a relatively small azimuth angle for pairing, thereby preventing loss of gains of beamforming of paired UEs, and improving performance of MUST transmission.

Embodiment 2

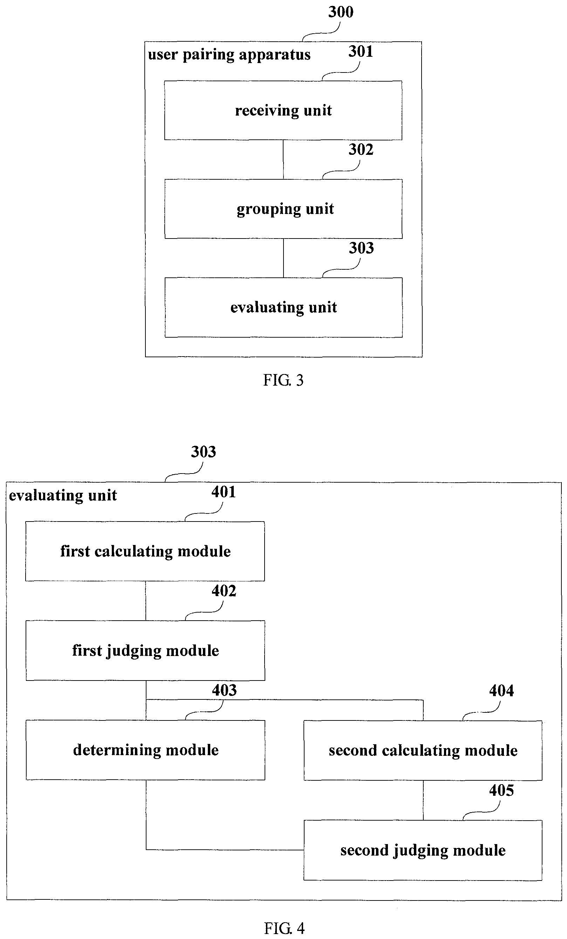

The embodiment of the disclosure provides a user pairing apparatus in multi-user superposition transmission (MUST), applicable to an eNB. FIG. 3 is a schematic diagram of a structure of the apparatus. Referring to FIG. 3, the apparatus 300 includes a receiving unit 301, a grouping unit 302 and an evaluating unit 303.

In this embodiment, the receiving unit 301 is configured to receive channel state information (CSI) fed back by each UE; wherein, the channel state information fed back by the UEs is as described in Embodiment 1, the contents of which being incorporated herein, which shall not be described herein any further.

In this embodiment, the grouping unit 302 is configured to group all UEs according to the precoding matrix indices (PMIs) in the channel state information fed back by the UEs, such as placing UEs with identical PMIs into the same group; wherein, only UEs with identical PMIs are possible to be paired for MUST transmission, hence, the eNB groups the UEs with identical PMIs into the same group.

In this embodiment, the evaluating unit 303 is configured to, according to a predefined evaluation condition, evaluate whether any two of UEs in the same group can be paired to perform MUST transmission, so as to determine a UE pair capable of being paired to perform MUST transmission.

In this embodiment, the evaluation condition may be that: an azimuth angle between the two UEs are less than a first threshold, and an absolute value of a difference between second channel quality indicators ($CQI_2$s) of the two UEs is greater than a second threshold; wherein, the second channel quality indicators ($CQI_2$s) correspond to channel direction indicators (CDIs).

In this embodiment, in evaluating whether any two of UEs in the same group can be paired to perform MUST transmission according to the predefined evaluation condition, the evaluating unit 303 first calculates the azimuth angle between the two UEs according to azimuth angle reference information of the two UEs, and then estimates whether the two UEs can be paired to perform MUST transmission according to the above evaluation condition.

FIG. 4 is a schematic diagram of a structure of one implementation of the evaluating unit 303. As shown in FIG. 4, in this implementation, the evaluating unit 303 includes a first calculating module 401, a first judging module 402, a determining module 403, a second calculating module 404 and a second judging module 405.

In this implementation, the first calculating module 401 is configured to calculate the azimuth angle between the two UEs according to the azimuth angle reference information of the two UEs.

In this implementation, corresponding to different azimuth angle reference information, manners for calculating the azimuth angle between the two UEs by the first calculating module 401 are different.

In one implementation, the azimuth angle reference information is a directed included angle from a direction to which the PMI corresponds to a direction angle of the UE, or a one to one mapping function of the directed included angle. In this implementation, the first calculating module 401 may first determine the above directed included angle of the UE according to the azimuth angle reference information, and then calculates the azimuth angle between the two UEs according to the directed included angles of the two UEs. In this implementation, if the azimuth angle reference information is the directed included angle from the direction to which the PMI corresponds to the direction angle of the UE, as shown in FIG. 1, after UE1 reports $\theta 1$ and UE2 reports $\theta 2$, the first calculating module 401 may directly determine the directed included angle according to the azimuth angle reference information; and if the azimuth angle reference information is the one to one mapping function of the directed included angle, the first calculating module 401 may determine the directed included angle according to the function. Having the directed included angles from the direction to which the PMI corresponds to the direction|angles of the two UEs, the eNB may obtain the azimuth angle between the two UEs; wherein, as one of the directed included angles is positive and the other one is negative, the eNB may obtain the azimuth angle $\theta_{1,2} = |\theta 1 - \theta 2|$ between the two UEs by subtracting the two directed included angles by each other.

In another implementation, the azimuth angle reference information is a suboptimal PMI of the UE. In this implementation, the first calculating module 401 may first determine directions of directed included angles from directions to which the PMIs of the two UEs correspond to the respective direction angles according to whether the suboptimal PMIs of the two UEs are identical, and uses a difference between the first channel quality indicator and the second channel quality indicator of one of the two UEs and a difference between the first channel quality indicator and the second channel quality indicator of the other one of the two UEs to calculate the azimuth angle between the two UEs according to the respective directions of directed included angles of the two UEs. In this implementation, if the suboptimal PMIs of the two UEs are identical, it means that the two UEs are located at the same side of the direction to which the PMIs reported by them correspond. Referring to UE1 and UE3 shown in FIG. 1, PMIs reported by the two UEs are identical and suboptimal PMIs reported by the two UEs are also identical, and the two UEs are located at the same side of the directions to which the PMIs reported by them correspond; and furthermore, if the suboptimal PMIs of the two UEs are different, it means that the two UEs are located at different sides of the directions to which the PMIs reported by them correspond. Referring to UE1 and UE2 shown in FIG. 1, PMIs reported by the two UEs are identical and suboptimal PMIs reported by the two UEs are different, and the two UEs are located at different sides of the directions to which the PMIs reported by them correspond. After obtaining the directions of the directed included angles of the two UEs, the eNB may, by using the first calculating module 401, according to differences between two CQIs respectively corresponding to PMI and CDI fed back by one of the two UEs and between two CQIs respectively corresponding to PMI and CDI fed back by the other one of the two UEs, calculate sizes of amplitudes of the included angles between the direction angles of the UEs and the directions to which the PMIs correspond, i.e. the azimuth angle between the two UEs.

For example, if the two UEs are located at the same side of the PMIs, the eNB may calculate the azimuth angle between the two UEs by using formula (1) below, and if the two UEs are located at different sides of the PMIs, the eNB may calculate the azimuth angle between the two UEs by using formula (2) below.

$$\theta_{i,j} = \left| \arccos(10^{\frac{CQI_{i,PMI}-CQI_{i,CDI}}{20}}) - \arccos(10^{\frac{CQI_{j,PMI}-CQI_{j,CDI}}{20}}) \right| \tag{1},$$

$$\theta_{i,j} = \left| \arccos(10^{\frac{CQI_{i,PMI}-CQI_{i,CDI}}{20}}) + \arccos(10^{\frac{CQI_{j,PMI}-CQI_{j,CDI}}{20}}) \right| \tag{2};$$

where, $\theta_{i,j}$ is an azimuth angle between $UE_i$ and $UE_j$, $CQI_{i,PMI}$ is a CQI of $UE_i$ corresponding to the PMI, $CQI_{i,CDI}$ is a CQI of $UE_i$ corresponding to the CDI, $CQI_{j,PMI}$ is a CQI of $UE_j$ corresponding to the PMI, $CQI_{j,CDI}$ is a CQI of $UE_j$ corresponding to the CDI.

In this embodiment, the first judging module 402 is configured to judge whether the azimuth angle between the two UEs is greater than the first threshold. In this embodiment, the first threshold is predefined to limit an azimuth angle between two UEs performing MUST transmission. If an azimuth angle between two UEs is greater than the first threshold, it means that the two UEs are unsuitable for performing MUST transmission, and the eNB does not take the two UEs as a UE pair for performing MUST transmission.

In this embodiment, the determining module 403 is configured to determine that the two UEs cannot be paired when it is judged as yes by the first judging module 402. That is, if it is judged as yes by the first judging module 402, it means that the azimuth angle between the two UEs is greater than the first threshold, and as described above, the two UEs are unsuitable for being paired for performing MUST transmission.

In this embodiment, the second calculating module 404 is configured to calculate the difference between the second channel quality indicators of the two UEs when it is judged as no by the first judging module 402.

In one implementation of this embodiment, the second channel quality indicators may be obtained from the indication information of the second channel quality indicators in the received CSI, that is, as described above, if the channel state information includes the indication information of the second channel quality indicators, the second calculating module 404 determines the second channel quality indicators of the two UEs according to the indication information of the second channel quality indicators fed back by the two UEs, and calculates the difference between the second channel quality indicators of the two UEs according to the second channel quality indicators of the two UEs.

In another implementation of this embodiment, the second channel quality indicators are designated by the eNB. That is, if the channel state information does not include the indication information of the second channel quality indicators, the second calculating module 404 takes the first channel quality indicators fed back by the two UEs as the second channel quality indicators of the two UEs, and calculates the difference between the second channel quality indicators of the two UEs according to the second channel quality indicators of the two UEs.

In this embodiment, the second judging module 405 is configured to judge whether the absolute value of the difference between the second channel quality indicators of the two UEs is greater than the second threshold. In this embodiment, if it is judged as no by the first judging module 402, it means that the azimuth angle between the two UEs is within a tolerable range. However, the two UEs being definitely able to be paired for performing MUST transmission are not accordingly determined, and whether the two UEs can be paired for performing MUST transmission is further limited by another threshold (referred to as a second threshold) in this embodiment. For example, if the absolute value of the difference between the second channel quality indicators of the two UEs is greater than the second threshold, it will be deemed that a difference between actual channel quality of the two UEs is relatively large, and they are suitable for being paired for performing MUST transmission; and if the absolute value of the difference between the second channel quality indicators of the two UEs is not greater than the second threshold, it will be deemed that actual channel quality of the two UEs is relatively small, and they are unsuitable for being paired for performing MUST transmission.

In this embodiment, the determining module 403 is configured to determine that the two UEs can be paired for performing MUST transmission when it is judged as yes by the second judging module 405, and the two UEs cannot be paired for performing MUST transmission when it is judged as no by the second judging module 405.

With the user pairing apparatus in this embodiment, the eNB may group all UEs according to the channel state information fed back by the UEs, placing UEs with identical PMIs into the same group, and then estimate possible UE pair in each group with respect to whether they can be paired for performing MUST transmission, to avoid selecting UEs with a relatively large azimuth angle for pairing, and only select or preferentially select UEs with a relatively small azimuth angle for pairing, thereby preventing loss of gains of beamforming of paired UEs, and improving performance of MUST transmission.

Embodiment 3

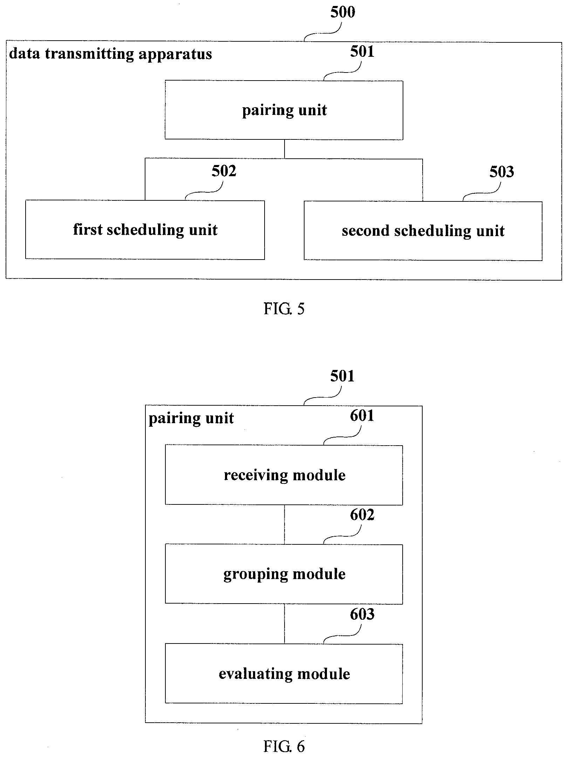

The embodiment of the disclosure provides a data transmitting apparatus, applicable to an eNB. FIG. 5 is a schematic diagram of a structure of the apparatus. Referring to FIG. 5, the apparatus 500 includes a pairing unit 501, a first scheduling unit 502 and a second scheduling unit 503.

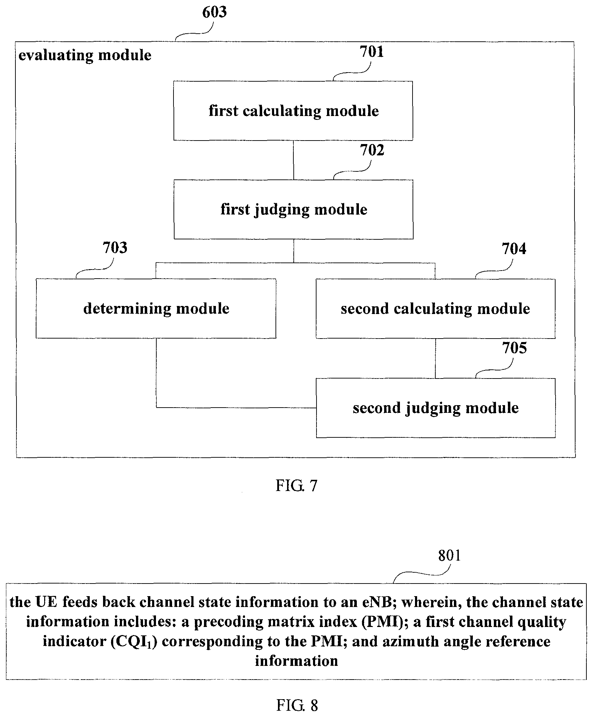

In this embodiment, the pairing unit 501 is configured to pair all UEs according to channel state information fed back by the UEs, so as to determine a UE pair capable of performing MUST transmission and UE(s) incapable of performing MUST transmission. In one implementation of this embodiment, the pairing unit 501 may be realized by the user pairing apparatus 300 described in Embodiment 2. FIG. 6 is a schematic diagram of a structure of the pairing unit 501. As shown in FIG. 6, the pairing unit 501 includes a receiving module 601, a grouping module 602 and an evaluating module 603. In this example, the receiving module 601 may be realized by the receiving unit 301 of the user pairing apparatus in Embodiment 2, the grouping module 602 may be realized by the grouping unit 302 of the user pairing apparatus in Embodiment 2, and the evaluating module 603 may be realized by the evaluating unit 303 of the user pairing apparatus in Embodiment 2, with the contents of the receiving unit 301, the grouping unit 302 and the evaluating unit 303 in Embodiment 2 being incorporated herein, which shall not be described herein any further. FIG. 7 is a schematic diagram of a structure of the evaluating module 603 of this embodiment. As shown in FIG. 7, the evaluating module 603 includes: a first calculating module 701, a first judging module 702, a determining module 703, a second calculating module 704 and a second judging module 705. In this example, the first calculating module 701, the first judging module 702, the determining module 703, the second calculating module 704 and the second judging module 705 may be realized by the first calculating module 401, the first judging module 402, the determining module 403, the second calculating module 404 and the second judging module 405 in Embodiment 2, with their contents being incorporated herein, which shall not be described herein any further.

In this embodiment, the first scheduling unit 502 is configured to, for the UE pair capable of performing MUST transmission, schedule two UEs constituting the UE pair to perform MUST transmission according to the channel state information fed back by the two UEs of the UE pair.

In this embodiment, the second scheduling unit 503 is configured to, for the UE(s) incapable of performing MUST transmission, schedule the UE(s) to perform transmission according to the channel state information fed back by the UE(s).

In one implementation of this embodiment, as described above, the CSI fed back by each UE includes: a PMI, a CQI ($CQI_1$) corresponding to the PMI, and azimuth angle reference information, such as an angle between the PMI and the direction angle, or a one to one mapping function of the angle, or a suboptimal PMI of the UE.

In another implementation of this embodiment, as described above, the CSI fed back by each UE includes: a PMI, a CQI ($CQI_1$) corresponding to the PMI, indication information of a CQI ($CQI_2$) corresponding to a CDI, such as the $CQI_2$ itself or a difference between the $CQI_2$ and the $CQI_1$, and azimuth angle reference information, such as an angle between the PMI and the direction angle, or a one to one mapping function of the angle, or a suboptimal PMI of the UE.

In an implementation of this embodiment, if the azimuth angle reference information fed back by the UE is a directed included angle from a direction to which the PMI corresponds to a direction angle of the UE, or a one to one mapping function of the directed included angle, the first scheduling unit 502 may allocate power, select modulation coding schemes and calculate beamforming vectors and scheduling indices, etc. for two UEs of the UE pair capable of being paired for performing MUST transmission, according to the PMIs and $CQI_2$s (optional) fed back by the two UEs, as well as the angles between the PMI and the direction angle, thereby scheduling the two UEs to perform data transmission. In this example, $CQI_2$ may be obtained from the above indication information of $CQI_2$, and the angles between the PMI and the direction angle may be obtained from the azimuth angle reference information.

In this implementation, the second scheduling unit 503 may select modulation coding schemes and calculate beamforming vectors and scheduling indices for the UE(s) incapable of being paired for performing MUST transmission, according to the PMI(s), $CQI_1$(s) or $CQI_2$(s) (optional), fed back by the UE(s), thereby scheduling the UE(s) to perform data transmission. Alternatively, the second scheduling unit 503 may further schedule the UE(s) according to the angle between the PMI and the direction angle. In this example, $CQI_2$ may be obtained from the above indication information of $CQI_2$, and the angle between the PMI and the direction angle may be obtained from the azimuth angle reference information.

In still another implementation of this embodiment, if the azimuth angle reference information fed back by each UE is the suboptimal PMI, the first scheduling unit 502 may allocate power, select modulation coding schemes and calculate beamforming vectors and scheduling indices, etc. for two UEs of the UE pair capable of being paired for performing MUST transmission, according to the PMIs and $CQI_1$s fed back by the two UEs, as well as the azimuth angle between the two UEs, thereby scheduling the two UEs to perform data transmission. In this example, the azimuth angle between the two UEs may be obtained by the first calculating module 701.

In this implementation, the second scheduling unit 503 may select modulation coding schemes and calculate beamforming vectors and scheduling indices for the UE(s) incapable of being paired for performing MUST transmission, according to the PMI(s) and $CQI_1$(s) fed back by the UE(s), thereby scheduling the UE(s) to perform data transmission.

In this embodiment, for each scheduling resource unit (such as a subband), the eNB will, by using the first scheduling unit 502 and the second scheduling unit 503, respectively calculate scheduling indices (such as a throughput, and a proportion fairness factor, etc.) that may be reached by all candidate UE pairs (MUST transmission) and individual UE (orthogonal transmission), and allocate scheduling resource units accordingly.

With the data transmitting apparatus in this embodiment, the eNB may avoid selecting UEs with a relatively large azimuth angle for pairing, and only select or preferentially select UEs with a relatively small azimuth angle for pairing, thereby preventing loss of gains of beamforming of paired UEs, and improving performance of MUST transmission.

Embodiment 4

The embodiment of the disclosure provides a method for feeding back channel state information, applicable to UE. As principles of the method for solving problems are similar to that of the apparatus of Embodiment 1, the implementation of the apparatus of Embodiment 1 may be referred to for implementation of the method, with identical contents being not going to be described herein any further.

FIG. 8 is a flowchart of the method. Referring to FIG. 8, the method includes:

step 801: the UE feeds back channel state information to an eNB; wherein, the channel state information includes: a precoding matrix index (PMI); a first channel quality indicator ($CQI_1$) corresponding to the PMI; and azimuth angle reference information.

In this embodiment, the channel state information may further include: indication information of a second channel quality indicator ($CQI_2$); wherein, the second channel quality indicator ($CQI_2$) corresponds to a channel direction indicator (CDI).

In this embodiment, the indication information of the second channel quality indicator ($CQI_2$) may be the second channel quality indicator ($CQI_2$), or a difference between the second channel quality indicator ($CQI_2$) and the first channel quality indicator ($CQI_1$).

In this embodiment, the azimuth angle reference information may be a directed included angle from a direction to which the PMI corresponds to a direction angle of the UE, or a one to one mapping function of the directed included angle, or a suboptimal precoding matrix index (PMI) of the UE.

With the method for feeding back channel state information in this embodiment, the UE may feed back the CSI, and the eNB may accordingly calculate the azimuth angle between the two UEs being performed pairing estimation, so as to avoid selecting UEs with a relatively large azimuth angle for pairing, and only select or preferentially select UEs with a relatively small azimuth angle for pairing, thereby preventing loss of gains of beamforming of paired UEs, and improving performance of MUST transmission.

Embodiment 5

The embodiment of the disclosure further provides a user pairing method in multi-user superposition transmission (MUST), applicable to an eNB. As principles of the method for solving problems are similar to that of the apparatus of Embodiment 2, the implementation of the apparatus of Embodiment 2 may be referred to for implementation of the method, with identical contents being not going to be described herein any further.

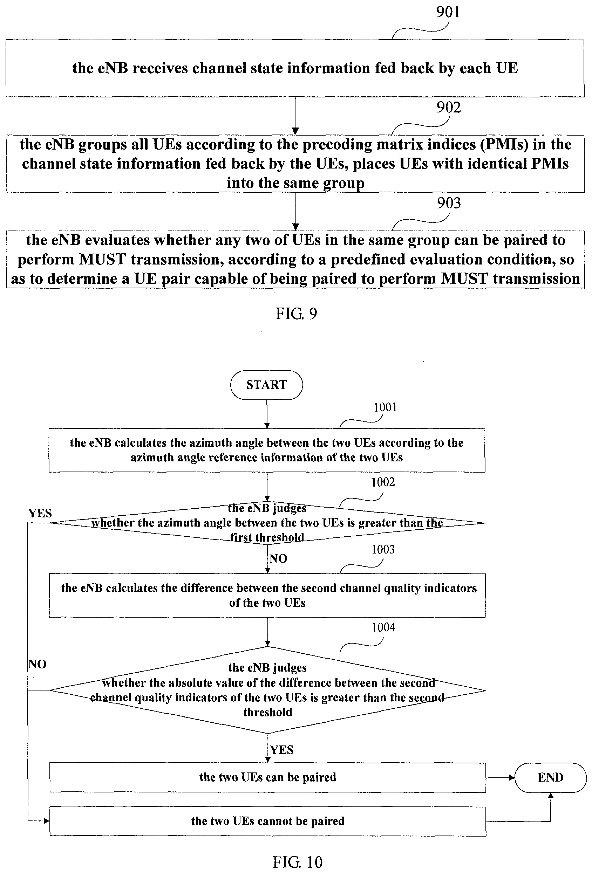

FIG. 9 is a flowchart of the method. Referring to FIG. 9, the method includes:

step 901: the eNB receives channel state information fed back by each UE; wherein, the channel state information fed back by each UE includes: a precoding matrix index (PMI), a first channel quality indicator ($CQI_1$) corresponding to the PMI, and azimuth angle reference information; or the channel state information fed back by each UE includes: a precoding matrix index (PMI), a first channel quality indicator ($CQI_1$) corresponding to the PMI, indication information of a second channel quality indicator ($CQI_2$) corresponding to a channel direction indicator (CDI), and azimuth angle reference information;

step 902: the eNB groups all UEs according to the precoding matrix indices (PMIs) in the channel state information fed back by the UEs, places UEs with identical PMIs into the same group; and

step 903: the eNB evaluates whether any two of UEs in the same group can be paired to perform MUST transmission, according to a predefined evaluation condition, so as to determine a UE pair capable of being paired to perform MUST transmission.

In this embodiment, as described above, the indication information of the second channel quality indicator ($CQI_2$) may be the second channel quality indicator ($CQI_2$), or a difference between the second channel quality indicator ($CQI_2$) and the first channel quality indicator ($CQI_1$), and the azimuth angle reference information may be a directed included angle from a direction to which the PMI corresponds to a direction angle of the UE, or a one to one mapping function of the directed included angle, or a suboptimal precoding matrix index (PMI) of the UE.

In this embodiment, the evaluation condition may be that the azimuth angle between the two UEs is less than a first threshold, and an absolute value of a difference between second channel quality indicators ($CQI_2$s) of the two UEs is greater than a second threshold, two UEs satisfying the evaluation condition may be paired to perform MUST transmission. In this example, the second channel quality indicators ($CQI_2$s) correspond to channel direction indicators (CDIs).

In this embodiment, step 903 may be carried out by using a method shown in FIG. 10. Referring to FIG. 10, the method includes:

step 1001: the eNB calculates the azimuth angle between the two UEs according to the azimuth angle reference information of the two UEs;

step 1002: the eNB judges whether the azimuth angle between the two UEs is greater than the first threshold, determines that the two UEs cannot be paired when it is judged as yes, otherwise, executes step 1003;

step 1003: the eNB calculates the difference between the second channel quality indicators of the two UEs; and

step 1004: the eNB judges whether the absolute value of the difference between the second channel quality indicators of the two UEs is greater than the second threshold, determines that the two UEs can be paired when it is judged as yes, otherwise, determines that the two UEs cannot be paired.

In this embodiment, if the azimuth angle reference information is the directed included angle from the direction to which the PMI corresponds to the direction angle, or the one to one mapping function of the directed included angle, the eNB may determine the directed included angles of the two UEs according to the azimuth angle reference information of the two UEs, and then calculate the azimuth angle between the two UEs according to the directed included angles of the two UEs, a particular calculation method being as described above, which shall not be described herein any further.

In this embodiment, if the azimuth angle reference information is a suboptimal precoding matrix index, the eNB may first determine directions of directed included angles from directions to which the PMIs of the two UEs correspond to the respective direction angles according to whether the suboptimal PMIs of the two UEs are identical, and use differences between the two CQIs (the first channel quality indicator and the second channel quality indicator) corresponding to PMI and CDI fed back by one of the two UEs and between the two CQIs (the first channel quality indicator and the second channel quality indicator) corresponding to PMI and CDI fed back by the other one of the two UEs to calculate the azimuth angle between the two UEs according to the respective directions of the directed included angles of the two UEs, a particular calculation method being as described above, which shall not be described herein any further.

With the user pairing method in this embodiment, the eNB may group all UEs according to the channel state information fed back by the UEs, placing UEs with identical PMIs into the same group, and then estimate possible UE pair in each group with respect to whether it can be paired for performing MUST transmission, so as to avoid selecting UEs with a relatively large azimuth angle for pairing, and only select or preferentially select UEs with a relatively small azimuth angle for pairing, thereby preventing loss of gains of beamforming of paired UEs, and improving performance of MUST transmission.

Embodiment 6

The embodiment of the disclosure further provides a data transmitting method, applicable to an eNB. As principles of the method for solving problems are similar to that of the apparatus of Embodiment 3, the implementation of the apparatus of Embodiment 3 may be referred to for implementation of the method, with identical contents being not going to be described herein any further.

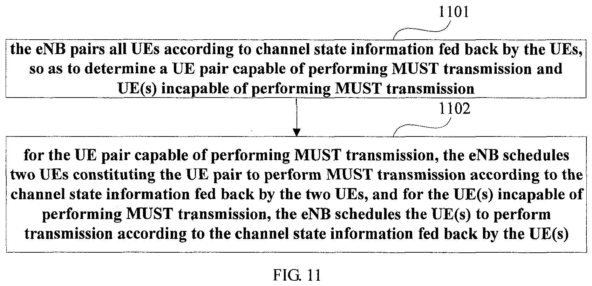

FIG. 11 is a flowchart of the method. Referring to FIG. 11, the method includes:

step 1101: the eNB pairs all UEs according to channel state information fed back by the UEs, so as to determine a UE pair capable of performing MUST transmission and UE(s) incapable of performing MUST transmission; and
step 1102: for the UE pair capable of performing MUST transmission, the eNB schedules two UEs constituting the UE pair to perform MUST transmission according to the channel state information fed back by the two UEs, and for the UE(s) incapable of performing MUST transmission, the eNB schedules the UE(s) to perform transmission according to the channel state information fed back by the UE(s).

In one implementation of this embodiment, the channel state information fed back by each UE may include:

a precoding matrix index (PMI);
a first channel quality indicator ($CQI_1$) corresponding to the PMI; and
azimuth angle reference information.

In another implementation of this embodiment, as described above, the channel state information fed back by each UE may include:

a precoding matrix index (PMI);
a first channel quality indicator ($CQI_1$) corresponding to the PMI;
indication information of a second channel quality indicator ($CQI_2$) corresponding to a channel direction indicator (CDI); and
azimuth angle reference information.

In this embodiment, step 1101 may be carried out by using the method in Embodiment 5, the contents of which being incorporated herein, which shall not be described herein any further.

In one implementation of this embodiment, in step 1102, for the UE pair capable of performing MUST transmission, the eNB may allocate power, select modulation coding schemes and calculate beamforming vectors and scheduling indices for the two UEs, according to the PMIs and $CQI_2$s (optional) in the channel state information fed back by the two UEs, as well as the directed included angles from the directions to which the PMIs correspond to the direction angles. In this implementation, the second channel quality indicator ($CQI_2$) may be obtained from the indication information of $CQI_2$ in the CSI fed back by the UE, and the angles between the PMIs and the direction angles may be obtained from the azimuth angle reference information fed back by the UEs. And for the UE(s) incapable of being paired for performing MUST transmission, the eNB may select modulation coding schemes and calculate beamforming vectors and scheduling indices for the UE(s), according to the precoding matrix indice (PMI) and the first channel quality indicator ($CQI_1$) or the second channel quality indicator ($CQI_2$) (optional) fed back by the UE, as well as the angle (optional) between the PMIs and the direction angles. In this implementation, the second channel quality indicator ($CQI_2$) may be obtained from the indication information of $CQI_2$ in the CSI fed back by the UE, and the angle between the PMIs and the direction angles may be obtained from the azimuth angle reference information fed back by the UE.

In another implementation of this embodiment, in step 1102, for the UE pair capable of performing MUST transmission, the eNB may allocate power, select modulation coding schemes and calculate beamforming vectors and scheduling indices for the two UEs, according to the PMIs and the first channel quality indicator ($CQI_1$) in the channel state information fed back by the two UEs, as well as the azimuth angle between the two UEs. In this implementation, the azimuth angle between the two UEs may be obtained from the azimuth angle reference information, the azimuth angle reference information here may be a suboptimal PMI. And for the UE pair incapable of performing MUST transmission, the eNB may select modulation coding schemes and calculate beamforming vectors and scheduling indices for the UE(s), according to the precoding matrix indices (PMIs) and the first channel quality indicator ($CQI_1$) in the channel state information fed back by the UE(s).

With the data transmitting method in this embodiment, the eNB may avoid selecting UEs with a relatively large azimuth angle for pairing, and only select or preferentially select UEs with a relatively small azimuth angle for pairing, thereby preventing loss of gains of beamforming of paired UEs, and improving performance of MUST transmission.

In order that the apparatuses or methods in embodiments 1-6 can be more clear and easy to be understood, the operational processes of the UE and eNB shall be described below with reference to the accompanying drawings. However, the following accompanying drawings and operational processes are illustrative only, and are not intended to limit the embodiments of this disclosure.

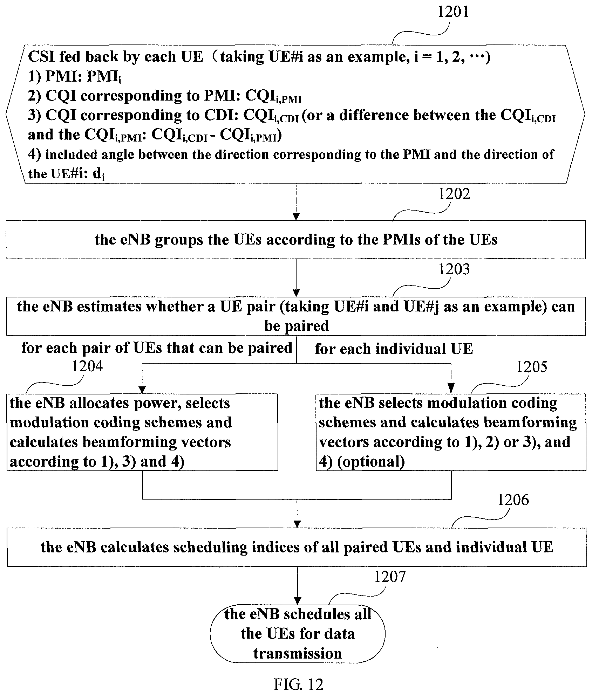

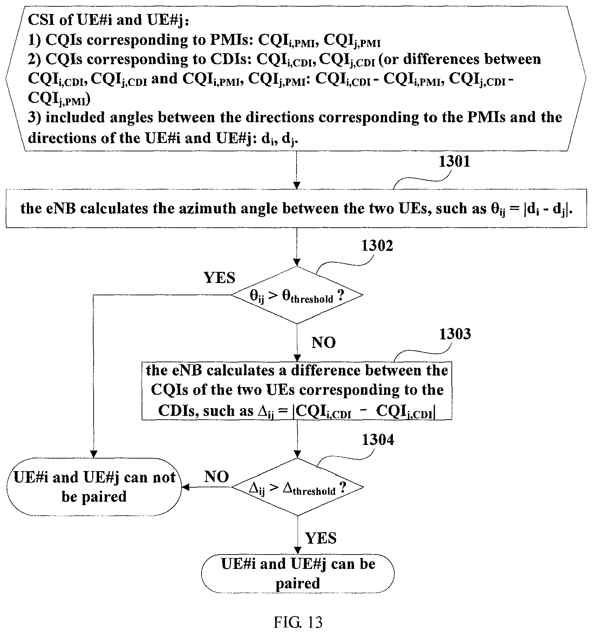

FIG. 12 is a flowchart of one implementation of the apparatuses or methods in embodiments 1-6, and FIG. 13 is a flowchart of the pairing estimation performed by the eNB on any two UEs in the process in FIG. 12.

As shown in FIG. 13, the process includes:

step 1301: the UEs feed back CSI to the eNB;

in this implementation, the CSI fed back by each UE includes: PMI, a CQI ($CQI_1$) corresponding to the PMI, a CQI ($CQI_2$) corresponding to the CDI or a difference between the CQI ($CQI_2$) corresponding to the CDI and the CQI ($CQI_1$) corresponding to the PMI, an included angle between the PMI and the direction angle or a one to one mapping function of the included angle;

in this implementation, taking UE#i (i=1, 2, ...) as an example, CSI fed back by UE#i includes:

1) the PMI: $PMI_i$;
2) the CQI corresponding to the PMI: $CQI_{i,PMI}$;
3) the CQI corresponding to the CDI: $CQI_{i,CDI}$, or a difference between the CQI corresponding to the CDI and the CQI corresponding to the PMI: $CQI_{i,CDI} - CQI_{i,PMI}$; and
4) the included angle between the PMI and the direction angle: $d_i$;

step 1202: the eNB groups the UEs according to the PMIs of the UEs;

in this implementation, after receiving the CSI fed back by the UEs, the eNB first groups all the UEs according to the PMIs of the UEs;

step 1203: the eNB estimates whether a UE pair can be paired;

in this implementation, the eNB performs pairing estimation on any two UEs in each group; here, description is given by taking that UEs being performed pairing estimation is UE#i and UE#j as an example, and a detailed estimation process shall be described in FIG. 12;

step 1204: for each pair of UEs that can be paired, the eNB allocates power, selects modulation coding schemes and calculates beamforming vectors for the two UEs according to 1), 3) and 4) in the CSI fed back by the two UEs;

step 1205: for each individual UE (UE that cannot be paired), the eNB selects modulation coding schemes and calculates beamforming vectors for the UE according to 1), 2) or 3), and 4) (optional), in the CSI fed back by the UE;

step 1206: the eNB calculates scheduling indices of all paired UEs and individual UE; and

step 1207: the eNB schedules all the UEs for data transmission.

As shown in FIG. 13, the process of pairing estimation includes:

step 1301: the eNB calculates the azimuth angle between the two UEs;

in this implementation, taking that UE pair being performed pairing estimation is UE#i and UE#j as an example, the eNB may obtain respective CSI of the two UEs, including:

1) the CQIs corresponding to the PMIs: $CQI_{i,PMI}$ and $CQI_{j,PMI}$;
2) the CQIs corresponding to the CDIs: $CQI_{i,CDI}$ and $CQI_{j,CDI}$, or differences between the CQIs corresponding to the CDIs and the CQIs corresponding to the PMIs: $CQI_{i,CDI} - CQI_{i,PMI}$ and $CQI_{j,CDI} - CQI_{j,PMI}$; and
3) the included angles between the PMI and the direction angles: $d_i$ and dj;

in this implementation, with the above information 3), the eNB may obtain the azimuth angle between the two UEs through calculation, such as $\theta_{i,j} = |d_i - d_j|$;

step 1302: the eNB judges whether $\theta_{i,j}$ is greater than $\theta_{threshold}$;

in this implementation, if it is judged as yes, UE#i and UE#j are determined as being unable to be paired for performing MUST transmission;

step 1303: the eNB calculates a difference between the CQIs of the two UEs corresponding to the CDIs;

in this implementation, with the above information 2), the eNB may obtain the CQIs of the two UEs corresponding to the CDIs, thereby obtain the difference between the CQIs of the two UEs corresponding to the CDIs, that is,

$$\Delta_{i,j} = \mid CQI_{i,CDI} - CQI_{j,CDI} \mid \, ;$$

step 1304: the eNB judges whether $\Delta_{i,j}$ is greater than the second threshold $\Delta_{threshold}$;

in this implementation, if it is judged as yes, UE#i and UE#j are determined as being able to be paired for performing MUST transmission, otherwise, UE#i and UE#j are determined as being unable to be paired for performing MUST transmission.

With the process of this implementation, the UEs may feed back the CSI including the CQIs corresponding to the CDIs and the angles between the PMI and the direction angle, and the eNB may accordingly calculate the azimuth angle between the two UEs being performed pairing estimation, may avoid selecting UEs with a relatively large azimuth angle for pairing, and may only select or preferentially select UEs with a relatively small azimuth angle for pairing, thereby preventing loss of gains of beamforming of paired UEs, and improving performance of MUST transmission.

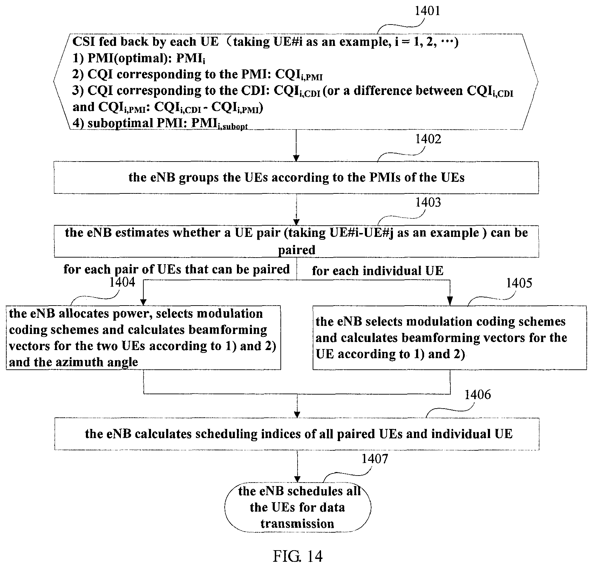

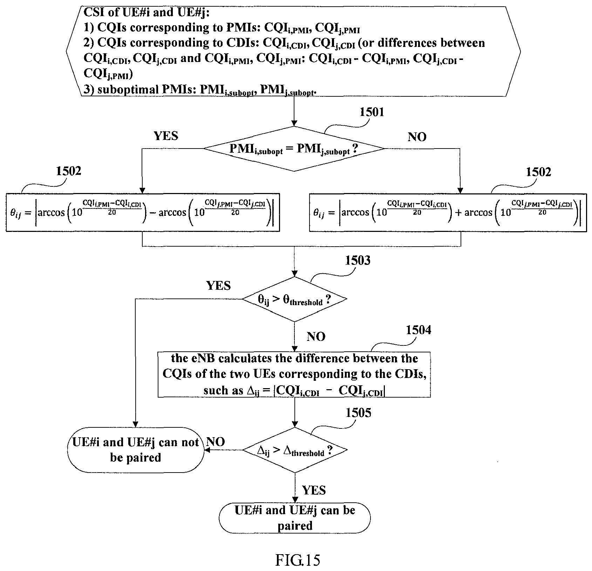

FIG. 14 is a flowchart of another implementation of the apparatuses or methods in embodiments 1-6, and FIG. 15 is a flowchart of the pairing estimation performed by the eNB on any two UEs in the process in FIG. 14.

As shown in FIG. 14, the process includes:

step 1401: the UEs feed back CSI to the eNB;

in this implementation, what is different from the implementation of FIG. 11 is that the CSI fed back by each UE includes: the PMI, the CQI ($CQI_1$) corresponding to the PMI, the CQI ($CQI_2$) corresponding to the CDI or the difference between the CQI ($CQI_2$) corresponding to the CDI and the CQI ($CQI_1$) corresponding to the PMI, and the suboptimal PMI;

in this implementation, taking UE#i (i=1, 2, ...) as an example, CSI fed back by UE#i includes:

1) the PMI (optimal): $PMI_i$;
2) the CQI corresponding to the PMI: $CQI_{i,PMI}$;
3) the CQI corresponding to the CDI: $CQI_{i,CDI}$, or a difference between the CQI corresponding to the CDI and the CQI corresponding to the PMI: $CQI_{i,CDI} - CQI_{i,PMI}$; and
4) the suboptimal PMI: $PMI_{i,subopt}$;

step 1402: the eNB groups the UEs according to the PMIs of the UEs;

in this implementation, after receiving the CSI fed back by the UEs, the eNB first groups all the UEs according to the PMIs of the UEs;

step 1403: the eNB estimates whether a UE pair can be paired;

in this implementation, the eNB performs pairing estimation on any two UEs in each group; here, description is given by taking that UE pair being performed pairing estimation is UE#i and UE#j as an example, and a detailed estimation process shall be described in FIG. 14;

step 1404: for each pair of UEs that can be paired, the eNB allocates power, selects modulation coding schemes and calculates beamforming vectors for the two UEs according to 1) and 2) in the above CSI fed back by the two UEs and the azimuth angle;

in this implementation, the azimuth angle may be obtained through calculation with reference to the above suboptimal PMI, a calculation method being as described above, which shall not be described herein any further;

step 1405: for each individual UE (UE that cannot be paired), the eNB selects modulation coding schemes and calculates beamforming vectors for the UE according to 1) and 2) in the above CSI fed back by the UE;

step 1406: the eNB calculates scheduling indices of all paired UEs and individual UE; and

step 1407: the eNB schedules all the UEs for data transmission.

As shown in FIG. 15, the process of pairing estimation includes:

step 1501: the eNB judges whether the suboptimal PMIs of the two UEs are identical;

in this implementation, taking that UE pair being performed pairing estimation is UE#i and UE#j as an example, the eNB may obtain respective CSI of the two UEs, including:

> 1) the CQIs corresponding to the PMIs: $CQI_{i,PMI}$ and $CQI_{j,PMI}$;
> 2) the CQIs corresponding to the CDIs: $CQI_{i,CDI}$ and $CQI_{j,CDI}$, or differences between the CQIs corresponding to the CDIs and the CQIs corresponding to the PMIs: $CQI_{i,CDI}$- $CQI_{i,PMI}$ and $CQI_{j,CDI}$- $CQI_{j,PMI}$; and
> 3) the suboptimal PMIs: $PMI_{i,subopt}$ and $PMI_{j,subopt}$;

in this implementation, with the above information 3), the eNB may further determine whether the suboptimal PMIs of the two UEs are identical;

step 1502: the eNB calculates the azimuth angle between the two UEs;

in this implementation, the suboptimal PMIs being identical or different determines whether the two UEs are located at the same side or different sides of the PMIs, and methods for calculating the azimuth angle between the two UEs are also different;

in one implementation, if the suboptimal PMIs of the two UEs are identical, the two UEs are located at the same side of the PMIs, the eNB may calculate the azimuth angle between the two UEs according the following formula:

$$\theta_{i,j} = \left| \arccos(10^{\frac{CQI_{i,PMI}-CQI_{i,CDI}}{20}}) - \arccos(10^{\frac{CQI_{j,PMI}-CQI_{j,CDI}}{20}}) \right| \quad (1)$$

in another implementation, if the suboptimal PMIs of the two UEs are different, the two UEs are located at different sides of the PMIs, the eNB may calculate the azimuth angle between the two UEs according the following formula:

$$\theta_{i,j} = \left| \arccos(10^{\frac{CQI_{i,PMI}-CQI_{i,CDI}}{20}}) + \arccos(10^{\frac{CQI_{j,PMI}-CQI_{j,CDI}}{20}}) \right| \quad (2);$$

the above two formulae are illustrative only, and in particular implementations, the azimuth angle between the two UEs may be calculated by using other formulae or methods;

step 1503: the eNB judges whether $\theta_{i,j}$ is greater than the first threshold $\theta_{threshold}$;

in this implementation, if it is judged as yes, UE#i and UE#j are determined as being unable to be paired for performing MUST transmission;

step 1504: the eNB calculates the difference between the CQIs of the two UEs corresponding to the CDIs;

in this implementation, with the above information 2), the eNB may obtain the CQIs of the two UEs corresponding to the CDIs, there obtaining the difference between the CQIs of the two UEs corresponding to the CDIs, that is,

$$\Delta_{i,j} = \left| CQI_{i,CDI} - CQI_{j,CDI} \right| ;$$

step 1505: the eNB judges whether $\Delta_{i,j}$ is greater than the second threshold $\Delta_{threshold}$;

in this implementation, if it is judged as yes, UE#i and UE#j are determined as being able to be paired for performing MUST transmission, otherwise, UE#i and UE#j are determined as being unable to be paired for performing MUST transmission.

With the process of this implementation, the UE may feed back the CSI including the CQIs corresponding to the CDIs and the suboptimal PMIs, and the eNB may accordingly calculate the azimuth angle between the two UEs being performed pairing estimation, may avoid selecting UEs with a relatively large azimuth angle for pairing, and may only select or preferentially select UEs with a relatively small azimuth angle for pairing, thereby preventing loss of gains of beamforming of paired UEs, and improving performance of MUST transmission.

Embodiment 7

The embodiment of the disclosure provides UE, including the apparatus for feeding back channel state information described in Embodiment 1.

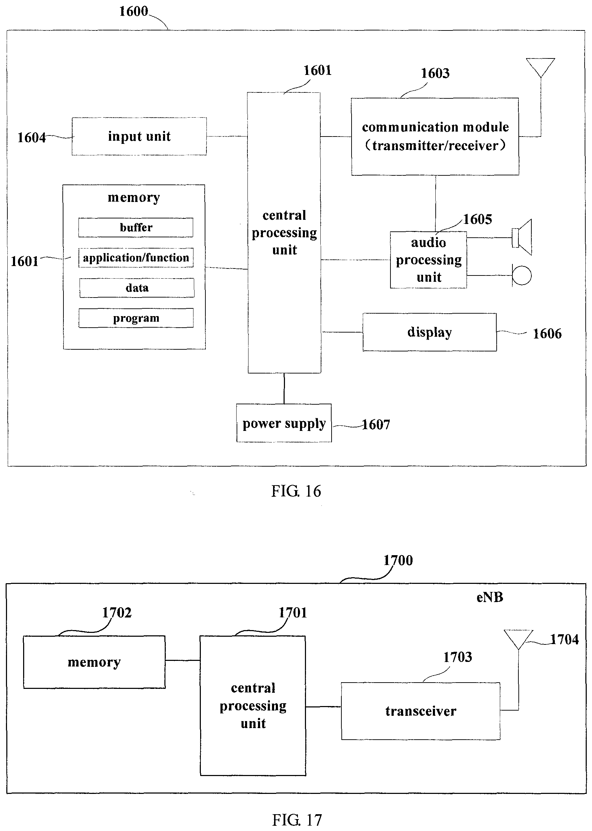

FIG. 16 is a block diagram of a systematic structure of the UE 1600 of the embodiment of this disclosure. As shown in FIG. 16, the UE 1600 may include a central processing unit 1601 and a memory 1602, the memory 1602 being coupled to the central processing unit 1601. It should be noted that this figure is illustrative only, and other types of structures may also be used, so as to supplement or replace this structure and achieve a telecommunications function or other functions.

In one implementation, the functions of the apparatus for feeding back channel state information may be integrated into the central processing unit 1601.

In another implementation, the apparatus for feeding back channel state information and the central processing unit 1601 may be configured separately. For example, the apparatus for feeding back channel state information may be configured as a chip connected to the central processing unit 1601, with its functions being realized under control of the central processing unit 1601.

As shown in FIG. 16, the UE 1600 may further include a communication module 1603, an input unit 1604, an audio processing unit 1605, a display 1606 and a power supply 1607. It should be noted that the UE 1600 does not necessarily include all the parts shown in FIG. 16, and furthermore, the UE 1600 may further include parts not shown in FIG. 16, and the prior art may be referred to.

As shown in FIG. 16, the central processing unit 1601 is sometimes referred to as a controller or control, and may include a microprocessor or other processor devices and/or logic devices. The central processing unit 1601 receives input and controls operations of every components of the UE 1600.

In this embodiment, the memory 1602 may be, for example, one or more of a buffer memory, a flash memory, a hard drive, a mobile medium, a volatile memory, a nonvolatile memory, or other suitable devices, which may store the above information, and may further store a program executing related information. And the central processing unit 1601 may execute the program stored in the memory 1602, so as to realize information storage or processing, etc. Functions of other parts are similar to those of the prior art, which shall not be described herein any further. The parts of the UE 1600 may be realized by specific hardware, firmware, software, or any combination thereof, without departing from the scope of the present disclosure.

With the UE of this embodiment, by feeding back the CSIs containing the indication information of the CQIs corresponding to the CDIs and the azimuth angle reference information by using the apparatus for feeding back channel state information, the eNB may accordingly calculate the azimuth angle between the two UEs being performed pairing estimation, so as to avoid selecting UEs with a relatively large azimuth angle for pairing, and only select or preferentially select UEs with a relatively small azimuth angle for pairing, thereby preventing loss of gains of beamforming of paired UEs, and improving performance of MUST transmission.

Embodiment 8

The embodiment of the disclosure provides an eNB, including the user pairing apparatus described in Embodiment 2 or the data transmitting apparatus described in Embodiment 3.

FIG. 17 is a schematic diagram of a structure of the eNB of the embodiment of this disclosure. As shown in FIG. 17, the eNB 1700 may include a central processing unit (CPU) 1701 and a memory 1702, the memory 1702 being coupled to the central processing unit 1701. In this embodiment, the memory 1702 may store various data, and furthermore, it may store a program for information processing, and execute the program under control of the central processing unit 1701, so as to receive various information transmitted by UE, and transmit various information to the UE.

In one implementation, the functions of the user pairing apparatus described in Embodiment 2 or the data transmitting apparatus described in Embodiment 3 may be integrated into the central processing unit 1701.

In another implementation, the user pairing apparatus described in Embodiment 2 or the data transmitting apparatus described in Embodiment 3 and the central processing unit 1701 may be configured separately. For example, the user pairing apparatus described in Embodiment 2 or the data transmitting apparatus described in Embodiment 3 may be configured as a chip connected to the central processing unit 1701, with its functions being realized under control of the central processing unit 1701.

Furthermore, as shown in FIG. 17, the eNB 1700 may include a transceiver 1703, and an antenna 1704, etc. In this embodiment, functions of the above components are similar to those in the prior art, and shall not be described herein any further. It should be noted that the eNB 1700 does not necessarily include all the parts shown in FIG. 17, and furthermore, the eNB 1700 may include parts not shown in FIG. 17, and the prior art may be referred to.

With the eNB of this embodiment, the eNB may avoid selecting UEs with a relatively large azimuth angle for pairing, and may only select or preferentially select UEs with a relatively small azimuth angle for pairing, thereby preventing loss of gains of beamforming of paired UEs, and improving performance of MUST transmission.

Embodiment 9

The embodiment of the disclosure further provides a communication system, including the UE described in Embodiment 7 and the eNB described in Embodiment 8.

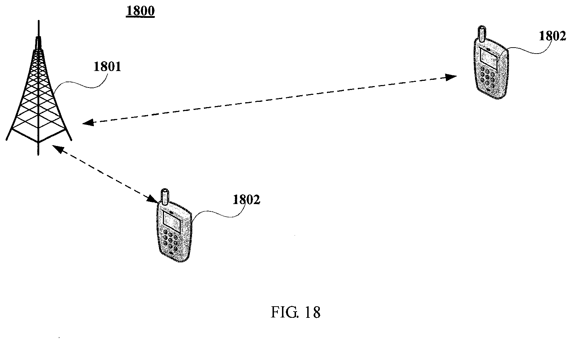

FIG. 18 is a schematic diagram of a structure of the communication system of an embodiment of this disclosure. As shown in FIG. 18, the communication system 1800 includes an eNB 1801 and UE 1802; wherein, the eNB 1801 may be the eNB 1700 described in Embodiment 8, and the UE 1802 may be the UE 1600 described in Embodiment 7. As the eNB and the UE have been described in detail in the above embodiments, the contents of which are incorporated herein, which shall not be described herein any further.

With the communication system in this embodiment, the UE may feed back the CSIs including the indication information of the CQI corresponding to the CDI and the azimuth angle reference information, and the eNB may accordingly calculate the azimuth angle between the two UEs being performed pairing estimation, so as to avoid selecting UEs with a relatively large azimuth angle for pairing, and only select or preferentially select UEs with a relatively small azimuth angle for pairing, thereby preventing loss of gains of beamforming of paired UEs, and improving performance of MUST transmission.

An embodiment of the present disclosure further provides a computer readable program code, which, when executed in an information processing apparatus or UE, will cause a computer unit to carry out the method for feeding back channel state information described in Embodiment 4 in the information processing apparatus or the UE.

An embodiment of the present disclosure further provides a computer readable medium, including a computer readable program code, which will cause a computer unit to carry out the method for feeding back channel state information described in Embodiment 4 in an information processing apparatus or UE.

An embodiment of the present disclosure further provides a computer readable program code, which, when executed in an information processing apparatus or an eNB, will cause a computer unit to carry out the user pairing method described in Embodiment 5 or the data transmitting method described in Embodiment 6 in the information processing apparatus or the eNB.

An embodiment of the present disclosure further provides a computer readable medium, including a computer readable program code, which will cause a computer unit to carry out the user pairing method described in Embodiment 5 or the data transmitting method described in Embodiment 6 in an information processing apparatus or an eNB.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the spirits and principles of the present disclosure, and such variants and modifications fall within the scope of the present disclosure.

**Claims**

1. An apparatus for feeding back channel state information, applicable to UE, the apparatus comprising:
   a feedback unit configured to feed back channel state information to an eNB; wherein, the channel state information comprises:

   a precoding matrix index (PMI);
   a first channel quality indicator ($CQI_1$) corresponding to the PMI; and
   azimuth angle reference information.

2. The apparatus according to claim 1, wherein the channel state information further comprises:
   indication information of a second channel quality indicator ($CQI_2$); wherein, the second channel quality indicator ($CQI_2$) corresponds to a channel direction indicator (CDI).

3. The apparatus according to claim 2, wherein the indication information of the second channel quality indicator ($CQI_2$) is: the second channel quality indicator ($CQI_2$), or a difference between the second channel quality indicator ($CQI_2$) and the first channel quality indicator ($CQI_1$).

4. The apparatus according to claim 1, wherein the azimuth angle reference information is: a directed included angle from a direction to which the PMI corresponds to direction angle of the UE, or a one to one mapping function of the directed included angle, or a suboptimal precoding matrix index (PMI) of the UE.

5. A user pairing apparatus in multi-user superposition transmission (MUST), applicable to an eNB, the apparatus comprising:

   a receiving unit configured to receive channel state information fed back by each UE; wherein, the channel state information fed back by each UE comprises: a precoding matrix index (PMI), a first channel quality indicator ($CQI_1$) corresponding to the PMI, and azimuth angle reference information, or comprises: a precoding matrix index (PMI), a first channel quality indicator ($CQI_1$) corresponding to the PMI, indication information of a second channel quality indicator ($CQI_2$) corresponding to a channel direction indicator (CDI), and azimuth angle reference information;
   a grouping unit configured to group all UEs according to the precoding matrix indices (PMIs) in the channel state information fed back by the UEs, placing UEs with identical PMIs into the same group; and
   an evaluating unit configured to, according to a predefined evaluation condition, evaluate whether any two of UEs in the same group can be paired to perform MUST transmission, so as to determine a UE pair capable of being paired to perform MUST transmission.

6. The apparatus according to claim 5, wherein the evaluation condition is that:

   an azimuth angle between the two UEs is less than a first threshold, and
   an absolute value of a difference between second channel quality indicators ($CQI_2$s) of the two UEs is greater than a second threshold, the second channel quality indicators ($CQI_2$s) corresponding to channel direction indicators (CDIs).

7. The apparatus according to claim 6, wherein the evaluating unit comprises:

   a first calculating module configured to calculate the azimuth angle between the two UEs according to the azimuth angle reference information of the two UEs;
   a first judging module configured to judge whether the azimuth angle between the two UEs is greater than the first threshold;
   a determining module configured to determine that the two UEs cannot be paired when it is judged as yes by the first judging module;
   a second calculating module configured to calculate the difference between the second channel quality indicators of the two UEs when it is judged as no by the first judging module; and
   a second judging module configured to judge whether the absolute value of the difference between the second channel quality indicators of the two UEs is greater than the second threshold;
   and when it is judged as yes by the second judging module, the determining module determines that the two UEs can be paired, and when it is judged as no by the second judging module, the determining module determines that the two UEs cannot be paired.

8. The apparatus according to claim 7, wherein the azimuth angle reference information is a directed included angle from a direction to which the precoding matrix index (PMI) corresponds to direction angle of the UE, or a one to one mapping function of the directed included angle, and the first calculating module determines the directed included angles of the two UEs according to the azimuth angle reference information of the two UEs, and calculates the azimuth angle between the two UEs according to the directed included angles of the two UEs.

9. The apparatus according to claim 7, wherein the azimuth angle reference information is a suboptimal precoding matrix index, and the first calculating module determines directions of directed included angles from directions to which the PMIs of the two UEs correspond to the respective direction angles according to whether the suboptimal PMIs of the two UEs are identical, and uses differences between the first channel quality indicators and the second channel quality indicators of the two UEs to calculate the azimuth angle between the two UEs according to the respective directions of the directed included angles of the two UEs.

10. The apparatus according to claim 7, wherein,
    if the channel state information comprises the indication information of the second channel quality indicator, the second calculating module determines the second channel quality indicators of the two UEs according to the indication information of the second channel quality indicators fed back by the two UEs, and calculates a difference between the second channel quality indicators of the two UEs according to the second channel quality indicators of the two UEs; and if the channel state information does not comprise the indication information of the second channel quality indicator, the second calculating module takes the first channel quality indicators fed back by the two UEs as the second channel quality indicators of the two UEs, and calculates the difference between the second channel quality indicators of the two UEs according to the second channel quality indicators of the two UEs.

11. A data transmitting apparatus, applicable to an eNB, the apparatus comprising:

a pairing unit configured to pair all UEs according to channel state information fed back by the UEs, so as to determine a UE pair capable of performing MUST transmission and UE(s) incapable of performing MUST transmission;

a first scheduling unit configured to, for the UE pair capable of performing MUST transmission, schedule two UEs constituting the UE pair to perform MUST transmission according to the channel state information fed back by the two UEs; and

a second scheduling unit configured to, for the UE(s) incapable of performing MUST transmission, schedule the UE(s) to perform transmission according to the channel state information fed back by the UE(s);

wherein, the channel state information fed back by each UE comprises: a precoding matrix index (PMI), a first channel quality indicator ($CQI_1$) corresponding to the PMI, and azimuth angle reference information, or comprises: a precoding matrix index (PMI), a first channel quality indicator ($CQI_1$) corresponding to the PMI, indication information of a second channel quality indicator ($CQI_2$) corresponding to a channel direction indicator (CDI), and azimuth angle reference information.

12. The apparatus according to claim 11, wherein the pairing unit comprises:

a receiving module configured to receive the channel state information (CSI) fed back by the UEs;

a grouping module configured to group all the UEs according to the precoding matrix indices (PMIs) in the channel state information fed back by the UEs, placing UEs with identical PMIs into the same group; and

an evaluating module configured to evaluate whether any two of UEs in the same group can be paired to perform MUST transmission according to a predefined evaluation condition, so as to determine a UE pair capable of being paired to perform MUST transmission and UE(s) incapable of performing MUST transmission.

13. The apparatus according to claim 12, wherein the evaluation condition is that:

an azimuth angle between the two UEs is less than a first threshold, and

an absolute value of a difference between second channel quality indicators ($CQI_2$s) of the two UEs is greater than a second threshold, the second channel quality indicators ($CQI_2$s) corresponding to channel direction indicators (CDIs).

14. The apparatus according to claim 13, wherein the evaluating module comprises:

a first calculating module configured to calculate the azimuth angle between the two UEs according to the azimuth angle reference information of the two UEs;

a first judging module configured to judge whether the azimuth angle between the two UEs is greater than the first threshold;

a determining module configured to determine that the two UEs cannot be paired when it is judged as yes by the first judging module;

a second calculating module configured to calculate the difference between the second channel quality indicators ($CQI_2$s) of the two UEs when it is judged as no by the first judging module; and

a second judging module configured to judge whether the absolute value of the difference between the second channel quality indicators ($CQI_2$s) of the two UEs is greater than the second threshold;

and when it is judged as yes by the second judging module, the determining module determines that the two UEs can be paired, and when it is judged as no by the second judging module, the determining module determines that the two UEs cannot be paired.

15. The apparatus according to claim 14, wherein the azimuth angle reference information is a directed included angle from a direction to which the PMI corresponds to direction angle of the UE, or a one to one mapping function of the directed included angle, and the first calculating module determines the directed included angles of the two UEs according to the azimuth angle reference information of the two UEs, and calculates the azimuth angle between the two UEs according to the directed included angles of the two UEs.

16. The apparatus according to claim 14, wherein the azimuth angle reference information is a suboptimal PMI, and the first calculating module determines directions of directed included angles from directions to which the PMIs of the two UEs correspond to the respective direction angles according to whether the suboptimal PMIs of the two UEs are identical, and uses differences between the first channel quality indicators and the second channel quality indicators of the two UEs to calculate the azimuth angle between the two UEs according to the respective directions of the directed included angles of the two UEs.

17. The apparatus according to claim 14, wherein,
if the channel state information comprises the indication information of the second channel quality indicator, the second calculating module determines the second channel quality indicators of the two UEs according to the indication information of the second channel quality indicators fed back by the two UEs, and calculates a difference between the second channel quality indicators of the two UEs according to the second channel quality indicators of the two UEs; and if the channel state information does not comprise the indication information of the second channel quality indicator, the second calculating module takes the first channel quality indicators fed back by the two UEs as the second channel quality indicators of the two UEs, and calculates the difference between the second channel quality indicators of the two UEs according to the second channel quality indicators of the two UEs.

18. The apparatus according to claim 15, wherein,
the first scheduling unit allocates power, selects modulation coding schemes, and calculates beamforming vectors and scheduling indices for the two UEs, according to the precoding matrix indices (PMIs) and the second channel quality indicator ($CQI_2$) in the channel state information fed back by the two UEs, as well as the directed included angles from the directions to which the PMIs correspond to the direction angles of the two UEs; and the second scheduling unit selects modulation coding schemes and calculates beamforming vectors and scheduling indices for the UE, according to the precoding matrix indices (PMIs), and the first channel quality indicator ($CQI_1$) or the second channel quality indicator ($CQI_2$) in the channel state information fed back by the UE.

19. The apparatus according to claim 18, wherein the second scheduling unit further selects modulation coding schemes and calculates beamforming vectors and scheduling indices for the UE, according to the directed included angle from the direction to which the PMI corresponds to the direction angle of the UE.

20. The apparatus according to claim 16, wherein,
the first scheduling unit allocates power, selects modulation coding schemes and calculates beamforming vectors and scheduling indices for the two UEs, according to the precoding matrix indices (PMIs) and the first channel quality indicator ($CQI_1$) in the channel state information fed back by the two UEs, as well as the azimuth angle between the two UEs; and the second scheduling unit selects modulation coding schemes and calculates beamforming vectors and scheduling indices for the UE, according to the precoding matrix indice (PMI) and the first channel quality indicator ($CQI_1$) in the channel state information fed back by the UE.

FIG. 1

**200**

apparatus for feeding back
channel state information    **201**

feedback unit

FIG. 2

300

user pairing apparatus 301

receiving unit

302

grouping unit

303

evaluating unit

FIG. 3

303

evaluating unit 401

first calculating module

402

first judging module

403 404

determining module second calculating module

405

second judging module

FIG. 4

**500**

```
data transmitting apparatus                    501

              ┌─────────────────────────────┐
              │        pairing unit         │
              └─────────────────────────────┘

        502                              503

┌───────────────────────┐      ┌───────────────────────┐
│  first scheduling unit │      │ second scheduling unit │
└───────────────────────┘      └───────────────────────┘
```

FIG. 5

**501**

```
pairing unit                        601

        ┌─────────────────────────────┐
        │      receiving module       │
        └─────────────────────────────┘

                                    602

        ┌─────────────────────────────┐
        │      grouping module        │
        └─────────────────────────────┘

                                    603

        ┌─────────────────────────────┐
        │      evaluating module      │
        └─────────────────────────────┘
```

FIG. 6

603

evaluating module

701

first calculating module

702

first judging module

703

determining module

704

second calculating module

705

second judging module

FIG. 7

801

the UE feeds back channel state information to an eNB; wherein, the channel state information includes: a precoding matrix index (PMI); a first channel quality indicator (CQI$_1$) corresponding to the PMI; and azimuth angle reference information

FIG. 8

901

the eNB receives channel state information fed back by each UE

902

the eNB groups all UEs according to the precoding matrix indices (PMIs) in the channel state information fed back by the UEs, places UEs with identical PMIs into the same group

903

the eNB evaluates whether any two of UEs in the same group can be paired to perform MUST transmission, according to a predefined evaluation condition, so as to determine a UE pair capable of being paired to perform MUST transmission

FIG. 9

START

1001

the eNB calculates the azimuth angle between the two UEs according to the azimuth angle reference information of the two UEs

1002

YES

the eNB judges whether the azimuth angle between the two UEs is greater than the first threshold

NO

1003

the eNB calculates the difference between the second channel quality indicators of the two UEs

1004

NO

the eNB judges whether the absolute value of the difference between the second channel quality indicators of the two UEs is greater than the second threshold

YES

the two UEs can be paired

END

the two UEs cannot be paired

FIG. 10

1101

the eNB pairs all UEs according to channel state information fed back by the UEs, so as to determine a UE pair capable of performing MUST transmission and UE(s) incapable of performing MUST transmission

1102

for the UE pair capable of performing MUST transmission, the eNB schedules two UEs constituting the UE pair to perform MUST transmission according to the channel state information fed back by the two UEs, and for the UE(s) incapable of performing MUST transmission, the eNB schedules the UE(s) to perform transmission according to the channel state information fed back by the UE(s)

FIG. 11

1201

CSI fed back by each UE (taking UE#i as an example, i = 1, 2, ···)
1) PMI: $PMI_i$
2) CQI corresponding to PMI: $CQI_{i,PMI}$
3) CQI corresponding to CDI: $CQI_{i,CDI}$ (or a difference between the $CQI_{i,CDI}$ and the $CQI_{i,PMI}$: $CQI_{i,CDI} - CQI_{i,PMI}$)
4) included angle between the direction corresponding to the PMI and the direction of the UE#i: $d_i$

1202

the eNB groups the UEs according to the PMIs of the UEs

1203

the eNB estimates whether a UE pair (taking UE#i and UE#j as an example) can be paired

for each pair of UEs that can be paired | for each individual UE

1204

the eNB allocates power, selects modulation coding schemes and calculates beamforming vectors according to 1), 3) and 4)

1205

the eNB selects modulation coding schemes and calculates beamforming vectors according to 1), 2) or 3), and 4) (optional)

1206

the eNB calculates scheduling indices of all paired UEs and individual UE

1207

the eNB schedules all the UEs for data transmission

FIG. 12

CSI of UE#i and UE#j:
1) CQIs corresponding to PMIs: $CQI_{i,PMI}$, $CQI_{j,PMI}$
2) CQIs corresponding to CDIs: $CQI_{i,CDI}$, $CQI_{j,CDI}$ (or differences between $CQI_{i,CDI}$, $CQI_{j,CDI}$ and $CQI_{i,PMI}$, $CQI_{j,PMI}$: $CQI_{i,CDI}$ - $CQI_{i,PMI}$, $CQI_{j,CDI}$ - $CQI_{j,PMI}$)
3) included angles between the directions corresponding to the PMIs and the directions of the UE#i and UE#j: $d_i$, $d_j$.

1301

the eNB calculates the azimuth angle between the two UEs, such as $\theta_{ij} = |d_i - d_j|$.

1302

YES

$\theta_{ij} > \theta_{threshold}$ ?

NO

1303

the eNB calculates a difference between the CQIs of the two UEs corresponding to the CDIs, such as $\Delta_{ij} = |CQI_{i,CDI} - CQI_{j,CDI}|$

1304

UE#i and UE#j can not be paired

NO

$\Delta_{ij} > \Delta_{threshold}$ ?

YES

UE#i and UE#j can be paired

FIG. 13

1401

CSI fed back by each UE (taking UE#i as an example, i = 1, 2, ···)
1) PMI(optimal): $PMI_i$
2) CQI corresponding to the PMI: $CQI_{i,PMI}$
3) CQI corresponding to the CDI: $CQI_{i,CDI}$ (or a difference between $CQI_{i,CDI}$ and $CQI_{i,PMI}$: $CQI_{i,CDI} - CQI_{i,PMI}$)
4) suboptimal PMI: $PMI_{i,subopt}$

1402

the eNB groups the UEs according to the PMIs of the UEs

1403

the eNB estimates whether a UE pair (taking UE#i-UE#j as an example) can be paired

for each pair of UEs that can be paired | for each individual UE

1404

the eNB allocates power, selects modulation coding schemes and calculates beamforming vectors for the two UEs according to 1) and 2) and the azimuth angle

1405

the eNB selects modulation coding schemes and calculates beamforming vectors for the UE according to 1) and 2)

1406

the eNB calculates scheduling indices of all paired UEs and individual UE

1407

the eNB schedules all the UEs for data transmission

FIG. 14

CSI of UE#i and UE#j:
1) CQIs corresponding to PMIs: $CQI_{i,PMI}$, $CQI_{j,PMI}$
2) CQIs corresponding to CDIs: $CQI_{i,CDI}$, $CQI_{j,CDI}$ (or differences between $CQI_{i,CDI}$, $CQI_{j,CDI}$ and $CQI_{i,PMI}$, $CQI_{j,PMI}$: $CQI_{i,CDI} - CQI_{i,PMI}$, $CQI_{j,CDI} - CQI_{j,PMI}$)
3) suboptimal PMIs: $PMI_{i,subopt}$, $PMI_{j,subopt}$.

1501

YES      $PMI_{i,subopt} = PMI_{j,subopt}$ ?      NO

1502

$$\theta_{ij} = \left| \arccos\left( 10^{\frac{CQI_{i,PMI} - CQI_{i,CDI}}{20}} \right) - \arccos\left( 10^{\frac{CQI_{j,PMI} - CQI_{j,CDI}}{20}} \right) \right|$$

1502

$$\theta_{ij} = \left| \arccos\left( 10^{\frac{CQI_{i,PMI} - CQI_{i,CDI}}{20}} \right) + \arccos\left( 10^{\frac{CQI_{j,PMI} - CQI_{j,CDI}}{20}} \right) \right|$$

1503

YES      $\theta_{ij} > \theta_{threshold}$ ?

NO    1504

the eNB calculates the difference between the CQIs of the two UEs corresponding to the CDIs, such as $\Delta_{ij} = |CQI_{i,CDI} - CQI_{j,CDI}|$

1505

UE#i and UE#j can not be paired   NO   $\Delta_{ij} > \Delta_{threshold}$ ?

YES

UE#i and UE#j can be paired

FIG.15

1600

FIG. 16

1700

FIG. 17

FIG. 18

# INTERNATIONAL SEARCH REPORT

| International application No. |
| --- |
| **PCT/CN2015/082793** |

| A. CLASSIFICATION OF SUBJECT MATTER |
| --- |
| H04B 7/04 (2006.01) i |
| According to International Patent Classification (IPC) or to both national classification and IPC |

| B. FIELDS SEARCHED |
| --- |
| Minimum documentation searched (classification system followed by classification symbols) |
| H04B; H04L |

| Documentation searched other than minimum documentation to the extent that such documents are included in the fields searched |
| --- |
| |

| Electronic data base consulted during the international search (name of data base and, where practicable, search terms used) |
| --- |
| CNABS; CNTXT; CNKI: user pairing, azimuth, channel state information, feedback, precoding matrix index, channel quality indicator, channel direction indicator, group |
| VEN: USTXT, user pair+, azimuth, angle, CSI, feedback, PMI, CQI, CDI, group |

## C. DOCUMENTS CONSIDERED TO BE RELEVANT

| Category* | Citation of document, with indication, where appropriate, of the relevant passages | Relevant to claim No. |
| --- | --- | --- |
| X | US 2014016549 A1 (SAMSUNG ELECTRONICS CO., LTD.), 16 January 2014 (16.01.2014), description, paragraphs [0041]-[0044] | 1 |
| A | CN 103973350 A (POTEVIO INSTITUTE OF TECHNOLOGY CO., LTD.), 06 August 2014 (06.08.2014), the whole document | 1-20 |
| A | CN 104378146 A (POTEVIO INSTITUTE OF TECHNOLOGY CO., LTD.), 25 February 2015(25.02.2015), the whole document | 1-20 |
| A | CN 101924586 A (ZTE CORP.), 22 December 2010 (22.12.2010), the whole document | 1-20 |

| ☐ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 06 March 2016 (06.03.2016) | **15 March 2016 (15.03.2016)** |
| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **WANG, Rui** Telephone No.: (86-10) **62089564** |

Form PCT/ISA/210 (second sheet) (July 2009)

**INTERNATIONAL SEARCH REPORT**
Information on patent family members

International application No.

**PCT/CN2015/082793**

| Patent Documents referred in the Report | Publication Date | Patent Family | Publication Date |
|---|---|---|---|
| US 2014016549 A1 | 16 January 2014 | WO 2014010986 A1 | 16 January 2014 |
| CN 103973350 A | 06 August 2014 | None | |
| CN 104378146 A | 25 February 2015 | None | |
| CN 101924586 A | 22 December 2010 | None | |

Form PCT/ISA/210 (patent family annex) (July 2009)